# EUROPÄISCHE PATENTSCHRIFT

(11) **EP 2 178 934 B1**
(45) Veröffentlichungstag und Bekanntmachung des Hinweises auf die Patenterteilung: **09.01.2013**
(21) Anmeldenummer: 08803001.0
(22) Anmeldetag: 12.08.2008
(51) Int. Cl.: C08F 220/34, C08G 18/80, C08J 3/18, C08K 5/00, C08L 33/06

(54) **VERBESSERTE BINDEMITTEL FÜR PLASTISOLE**
IMPROVED ADHESIVE AGENTS FOR PLASTISOLS
LIANTS AMÉLIORÉS POUR PLASTISOLS

(30) Priorität: 24.08.2007 DE 102007040304
(43) Veröffentlichungstag der Anmeldung: 28.04.2010
(73) Patentinhaber: KANEKA BELGIUM N.V., 2260 Westerlo-Oevel (BE)
(72) Erfinder: SCHATTKA, Jan Hendrik, 63454 Hanau (DE); LÖHDEN, Gerd, 45136 Essen (DE); KAUFMANN, Marita, 64347 Griesheim (DE); BELZNER, Winfried, 63584 Gründau (DE); WOLFF, Michael, 63517 Rodenbach (DE); LOMÖLDER, Rainer, 48153 Münster (DE); HOPPE, Dirk, 48301 Nottuln (DE); NACKE, Christoph, 46514 Schermbeck (DE)
(74) Vertreter: Vossius & Partner
(86) Internationale Anmeldenummer: PCT/EP2008/060557
(87) Internationale Veröffentlichungsnummer: WO 2009/027219

(56) Entgegenhaltungen:
- EP-A- 1 283 229
- EP-A- 1 371 674
- DE-A1- 3 442 646
- US-A1- 2006 106 168
- DATABASE WPI Week 200352 Thomson Scientific, London, GB; AN 2003-545255 XP002505649 & JP 2002 212373 A (ACHILLES CORP KK) 31. Juli 2002 (2002-07-31)

## Beschreibung

Die Erfindung betrifft Plastisole, die auch ohne den Zusatz von Haftvermittlern gute Haftung auf metallischen und katodisch tauchlakierten Substraten aufweisen.

Unter Plastisolen werden im allgemeinen Dispersionen von feinteiligen Kunststoffpulvern in Weichmachern verstanden, welche beim Erwärmen auf höhere Temperaturen gelieren, d.h. aushärten.

| | |
|---|---|
| Plastisol: | Mit "Plastisolen" sind hierin Mischungen gemeint, welche aus mindestens einem Bindemittel und einem Weichmacher bestehen. Darüber hinaus können Plastisole z.B. weitere Bindemittel, weitere Weichmacher, Füllstoffe, Rheologiehilfsmittel, Stabilisatoren, Haftvermittler, Pigmente und/oder Treibmittel enthalten. |
| Bindemittel: | Unter Bindemitteln werden hier polymere Verbindungen verstanden, die in der Regel als feines Pulver vorliegen. Durch Quellung (Aufnahme des Weichmachers) führen die Bindemittel zum Abbinden (Gelierung) des Plastisols. Unter anderem sind die Bindemittel maßgeblich für die Bildung und den Zusammenhalt eines Plastisolfilmes verantwortlich. |
| Polymerisat: | Mit Polymerisats ist hier allgemein das Ergebnis einer Polymerisation gemeint. Diese Polymerisation kann als z.B. als Batch, als Semibatch oder kontinuierlich ausgeführt werden. Dabei kann das Polymerisationsverfahren z.B. Suspensions, Lösungs- oder Emulsionspolymersiation sein. Außerdem kann die Polymerisation unter anderem z.B. mehrstufig |
| | sein, es können verschiedene Monomere oder Monomermischungen verwendet werden und/oder es können komplexe Zulaufverfahren (z.B. Powerfeed) zum Einsatz kommen. Die in dieser Schrift genannten Polymersiate dienen als Bindemittel für Plastisole. |
| Primärpartikel: | Mit "Primärpartikeln" sind hierin die Partikel gemeint, die nach der Emulsionspolymerisation in der erhaltenen Dispersion (Latex) vorliegen. |
| Sekundärpartikel: | Mit "Sekundärpartikeln" sind hierin die Partikel gemeint, die durch Trocknung der bei der Emulsionspolymerisation erhaltenen Dispersionen (Latices) erhalten werden. |
| (Meth)acrylate: | Mit dieser Schreibweise sind hierin sowohl die Ester der Methacrylsäure (wie z.B. Methylmethacrylat, n-Butylmethacrylat, Cyclohexylrnethacrylat) als auch die Ester der Acrylsäure, sowie deren Mischungen gemeint. |
| Partikelgröße | Wenn hierin von einer Partikelgröße, einer mittleren Partikelgröße oder einer mittleren Größe der Partikel die Rede ist, so ist - sofern nicht ausdrücklich anders angegeben - das der volumengewichtete Mittelwert der Teilchengrößenverteilung gemeint, wie es beispielsweise durch Laserbeugung (etwa mit Hilfe eines Coulter LS 13 320, Hersteller Beckmann-Coulter) erhalten werden kann. |

Solche - hin und wieder auch als "Organosole" bezeichneten - Plastisole finden für die verschiedensten Zwecke Anwendung, insbesondere als Dichtungs- und Schallisolationsmasse, als Kraftfahrzeug-Unterbodenschutz, als Korrosionsschutzüberzüge für Metalle, als Beschichtung von Metallblechbändern (Coil Coating), zum Imprägnieren und Beschichten von Substraten aus textilen Materialien und Papier (auch z.B. Teppichrückseitenbeschichtungen), als Fußbodenbeschichtungen, als Schlußstrichmassen bei Fußbodenbeschichtungen, für Kunstleder, als Kabelisolierungen und vieles mehr.

Ein wichtiges Anwendungsgebiet von Plastisolen ist der Schutz von Karosserieblechen am Unterboden von Kraftfahrzeugen gegen Steinschlag. In dieser Anwendung werden besonders hohe Anforderungen an die Plastisolpasten und die gelierten Filme gestellt.

Naturgemäß ist eine hohe mechanische Widerstandskraft gegen den durch Steinschlag verursachten Abrieb essentielle Voraussetzung. Desweiteren ist in der Automobilindustrie eine möglichst lange Verwendbarkeit der Plastisolpasten (Lagerstabilität) ebenso unabdingbar.

Die Plastisolpasten dürfen nicht zur Wasseraufnahme neigen, da vor der Gelierung aufgenommenes Wasser bei den hohen Temperaturen während der Gelierung verdampft und zur unerwünschten Blasenbildung führt.

Weiterhin müssen die Plastisolfilme eine gute Haftung auf dem Untergrund (meist KTL-Blech) aufweisen, was nicht nur eine wichtige Voraussetzung für die Abriebseigenschaften, sondern darüber hinaus auch für den Korrosionsschutz unerläßlich ist.

Der mengenmäßig bei weitem am häufigsten für die Herstellung von Plastisolen eingesetzte Kunststoff ist Polyvinylchlorid (PVC).

Plastisole auf Basis von PVC zeigen gute Eigenschaften und sind zudem relativ billig, was einer der Hauptgründe für deren noch immer weite Verbreitung ist.

Bei der Herstellung und Anwendung von PVC-Plastisolen treten jedoch eine Reihe von Problemen auf. Schon die Herstellung von PVC selbst ist nicht unproblematisch, weil in den Produktionsstätten die dort Beschäftigten einer gesundheitlichen Gefährdung durch das monomere Vinylchlorid ausgesetzt sind. Reste an monomerem Vinylchlorid im PVC könnten darüber hinaus auch bei der Weiterverarbeitung oder bei den Endverbrauchern gesundheitsgefährdend sein, obwohl die Gehalte im allgemeinen nur noch im ppb-Bereich liegen.

Besonders schwerwiegend ist bei der Anwendung von PVC-Plastisolen, daß das PVC sowohl wärme- als auch lichtempfindlich ist und zur Abspaltung von Chlorwasserstoff neigt. Dies stellt insbesondere dann ein ernstes Problem dar, wenn das Plastisol auf eine höhere Temperatur erhitzt werden muß, da der unter diesen Bedingungen freigesetzte Chlorwasserstoff korrodierend wirkt und metallische Substrate angreift. Von besonderer Bedeutung ist dies, wenn zur Verkürzung der Gelierzeit verhältnismäßig hohe Einbrenntemperaturen Anwendung finden, oder wenn, wie bei der Punktschweißung, lokal hohe Temperaturen auftreten.

Das größte Problem tritt bei der Entsorgung von PVC enthaltenden Abfällen auf: neben Chlorwasserstoff können unter Umständen Dioxine entstehen, welche hochgiftig sind. In Verbindung mit Stahlschrott können PVC-Reste zu einer Erhöhung des Chloridgehaltes der Stahlschmelze führen, was ebenfalls nachteilig ist.

Aus den genannten Gründen werden seit geraumer Zeit Alternativen zu PVC-Plastisolen gesucht und weiterentwickelt, die deren guten Verarbeitungs- und Endeigenschaften besitzen, nicht aber die mit dem enthaltenen Chlor verbundenen Probleme aufweisen.

So wurde z. B. vorgeschlagen, Vinylchloridpolymere zumindest teilweise durch Acrylpolymere zu ersetzen (JP 60 258241, JP 61 185518, JP 61 207418). Durch diesen Ansatz wurden die durch den Chlorgehalt bedingten Probleme jedoch lediglich verringert, aber nicht gelöst.

Verschiedene Polymere - üblicherweise aber nicht ausschließlich hergestellt durch Emulsionspolymerisation - wurden als chlorfreie Bindemittel untersucht; darunter z.B. Polystyrol-Copolymere (z.B. DE 4034725) und Polyolefine (z.B. DE 10048055). Hinsichtlich ihrer Verarbeitbarkeit und/oder der Eigenschaften der Pasten bzw. der ausgelierten Filme erfüllen solche Plastisole jedoch nicht die Anforderungen, die von Anwendern aufgrund der langjährigen Erfahrungen mit PVC-Plastisolen gestellt werden.

Eine gute Alternative zu PVC stellen jedoch Poly(meth)acrylate dar, die bereits seit vielen Jahren für die Herstellung von Plastisolen beschrieben sind (z.B. DE 2543542, DE 3139090, DE 2722752, DE 2454235).

Der Einsatz von Plastisolen auf Poly(meth)acrylatbasis z.B. im Automobilbau erfordert in aller Regel den Einsatz von Haftvermittlern, um eine ausreichende Haftung auf dem Substrat - oftmals Metall oder kathodisch tauchlakiertes Blech (KTL-Blech) - zu gewährleisten.

Hier haben sich vor allem blockierte Isocyanate - die meist in Verbindung mit Aminderivaten als Härtern eingesetzt werden - bewährt. (Als Beispiele erwähnt seien EP 214495, DE 3442646, DE 3913807.)

Obwohl diese Haftvermittler recht teuer sind, und bezüglich Lagerung und Handhabung nicht unbedenklich sind, ist deren Verwendung heute gerade bei hohen Anforderungen Stand der Technik.

In verschiedenen Patentschriften wird die Möglichkeit genannt, die Haftung des Bindemittels selbst durch den Einbau bestimmter Monomere zu verbessern.

Genannt wurden zum Beispiel stickstoffhaltige Monomere (z.B. DE 4030080).

DE 4130834 beschreibt ein Plastisolsystem mit verbesserter Haftung auf Kataphoreseblech auf Basis von Polyacryl(meth)acrylaten, wobei das Bindemittel neben Monomeren mit einem Alkylsubstituenten von 2-12 Kohlenstofifatomen ein Säureanhydrid enthält.

Die Verbesserung der Haftung durch solche Monomere ist in der Regel nicht sehr stark und um dennoch eine spürbare Verbesserung der Haftung zu erreichen, müssen entsprechend hohe Mengen dieser Monomere eingesetzt werden. Dadurch wiederum werden auch andere Eigenschaften des Plastisols beeinflusst, wie etwa die Lagerstabilität oder das Aufnahmevermögen für Weichmacher.

Aufgabe war es, ein Plastisol zur Verfügung zu stellen, dessen Bindemittel eine verbesserte Haftung aufweist, so dass auf die Zugabe von zusätzlichen Haftvermittlern verzichtet werden kann, oder deren Anteil in der Plastisolmischung verringert werden kann.

Die Aufgabe wurde gelöst durch ein Plastisol auf Basis eines halogenfreien Polymerisats, dadurch gekennzeichnet, dass Polymere enthalten sind, die Isocyanatgruppen enthalten, welche durch Schutzgruppen blockiert sind.

Überraschend wurde gefunden, dass die erfindungsgemäßen Polymerisate als Bindemittel in Plastisolen zu hervorragenden Haftungseigenschaften auf metallischen und katodisch tauchlakierten Substraten führen. Somit kann auf den Einsatz von Haftvermittlern ganz oder teilweise verzichtet werden.

Der Kontakt bei der Handhabung und Lagerung der Plastisole mit den zumeist giftigen Haftvermittlern entfällt oder wird zumindest verringert.

Der Isocyanatgehalt des Polymerisats beträgt bevorzugt 0,02 bis 5,0 Gew.-%, mehr bevorzugt 0,05 bis 2,0 Gew.-%, besonders bevorzugt 0,1-1,0 Gew.-%.

Der Isocyanatgehalt ist dabei zu berechnen als Gewicht der ungeschützten Isocyanatgruppen (NCO, d.h. 42 g/mol) bezogen auf das Gesamtgewicht des Polymerisats. Eventuell vorhandene Isocyanatgruppen, die nicht durch entfernen einer Schutzgruppe wieder zur Verfügung stehen bleiben bei der Berechnung unberücksichtigt.

Die Schutzgruppen der Isocyanate werden vorteilhafterweise bei den Gelierungstemperaturen des Plastisols deblockiert. Üblicherweise erfolgt die Deblockierung der Schutzgruppen der Isocyanate bei über 100°C , vorzugsweise bei über 120°C.

In einer bevorzugten Ausführungsform der Erfindung ist die Isocyanatgruppe über eine (Meth)acrylatgruppe im Rückrad des Polymers verankert.

Dabei werden bevorzugt Monomere verwendet, die auf Diisocyanaten basieren, deren eine Isocyanatgruppe mit einem OH-Guppe tragenden Ester der (Meth)acrylsäure umgesetzt wird, und deren andere Isocyanatgruppe durch eine Schutzgruppe blockiert ist.

Solche Monomere weisen die allgemeine Struktur 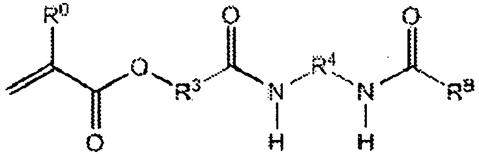 auf, wobei
- R⁰ eine Methylgruppe oder ein Wasserstoff darstellt,
- R³ einen beliebigen organischen Rest darstellt,
- R⁴ einen beliebigen organischen Rest darstellt und
- R^{B} eine Schutzgruppe darstellt.

Der Rest R³ bezeichnet einen Spacer, der üblicherweise von einem Diol, z.B. einem Polyetherdiol bzw. einem Polyalkoxyalkylen mit endständigen OH-Gruppen, abgeleitet ist. Auch Spacer die von oligomeren Polyestern mit terminalen OH-Gruppen abgeleitet sind sind verwendbar.

Besonders bevorzugt sind Reste, ausgewählt aus der Gruppe 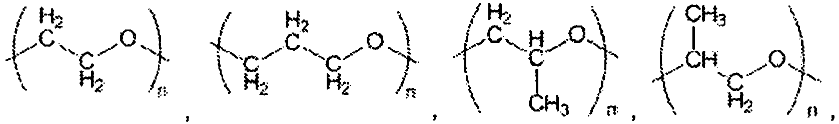 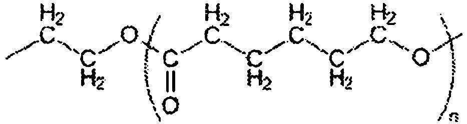 wobei n für eine ganze Zahl zwischen 1 und 6 steht.

Der Rest R⁴ leitet sich von einem Diisocyanat ab, d.h. R⁴ ist der Rest, an den die beiden Isocyanatgruppen gebunden sind.

Die R⁴ zugunde liegenden Diisocyanate können beliebige aromatische, aliphatische, cycloaliphatische und/oder (cyclo)aliphatische Diisocyanate sein.

Aromatische Diisocyanate können dabei prinzipiell alle bekannten Verbindungen sein. Besonders geeignet sind 1,3- und 1,4-Phenylendiisocyanat, 1,5-Naphthylendiisocyanat, Tolidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat und Tetramethylxylylen-diisocyanat.

In Frage kommende aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweise, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclo-hexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandiisocyanat, Undekandiisocyanat, Dodecandiisocyanate. Bevorzugt leitet sich R⁴ von Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethyl-hexamethylen-diisocyanat (TMDI), Norbornandiisocyanat (NBDI) ab. Ganz besonders bevorzugt sind die Reste von IPDI, HDI, TMDI und H₁₂MDI.

Ebenfalls geeignet sind die Reste von 4-Methyl-cyclohexan-1,3-diisocyanat, 2-Butyl-2-ethylpentamethylen-diisocyanat, 3(4)-Isocyanatomethyl-1-methylcyclohexyl-isocyanat, 2-Isocyanatopropylcyclohexylisocyanat, 2,4'-Methylen-bis(cyclohexyl)diisocyanat, 1,4-Diisocyanato-4-methyl-pentan.

Selbstverständlich können auch Gemische der Diisocyanate eingesetzt werden.

Besonders bevorzugt sind Reste R⁴ ausgewählt aus der Gruppe 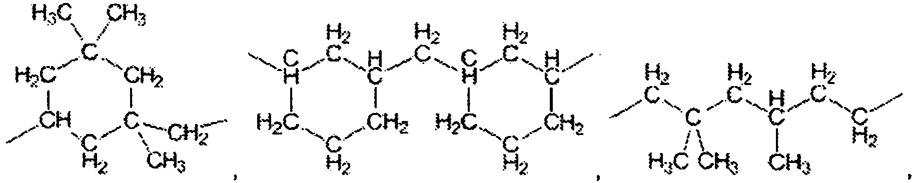 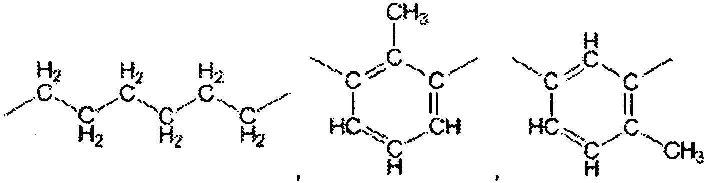 und

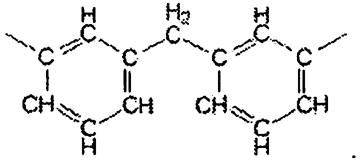

Als Blockierungsmittel für die Isocyanatgruppe können alle Blockierungsmittel eingesetzt werden.

Beipielsweise können Phenole wie Phenol, und p-Chlorphenol, Alkohole wie Benzylakohol, Oxime wie Acetonoxim, Methylethylketoxim, Cyclopentanonoxim, Cyclohexanonoxim, Methylisobutylketoxim, Methyl-tert.-butylketoxim, Diisopropylketoxim, Diisobutylketoxim oder Acetophenonoxim, N-HydroxyVerbindungen wie N-Hydroxysuccinimid oder Hydroxypyridine, Lactame wie ε-Caprolactam, CH-acide Verbindungen wie Acetessigsäureethylester oder Malonsäureester, Amine wie Diisopropylamin, heterocyclische Verbindungen mit mindestens einem Heteroatom wie Mercaptane, Piperidine, Piperazine, Pyrazole, Imidazole, Triazole und Tetrazole, α-Hydroxybenzoesäureester wie Glykolsäureester oder Hydroxamsäureester wie Benzylmethacrylohydroxamat verwendet werden.

Als Blockierungsmittel besonders geeignet sind Acetonoxim, Methylethylketoxim, Acetophenonoxim, Diisopropylamin, 3,5-Dimethylpyrazol, 1,2,4-Triazol, ε-Caprolactam, Glykolsäurebutylester, Benzylmethacylohydroxamat oder p-Hydroxybenzoesäuremethylester.

Selbstverständlich können auch Mischungen dieser Blockierungsmittel eingesetzt werden.

Als Schutzgruppe R^{B} wird der Rest verstanden, der nach der Reaktion des Blockierungsmittels an dem Stickstoff der geschützten Isocyanatgruppe gebunden ist.

Als Schutzgruppe besonders bevorzugt sind Reste, ausgewählt aus der Gruppe

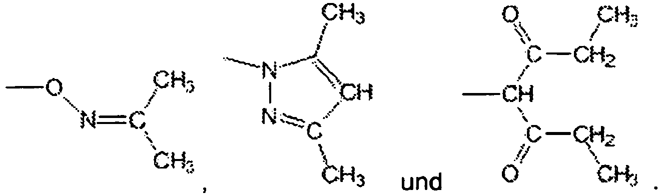

Entscheidend für die Funktion der Monomere in dem Bindemittel ist offenbar die Kombination aus (Meth)acrylatfunktion und geschützter Isocyanatgruppe.

Dabei ist die Reaktion einer der beiden Gruppen eines Diisocyanates mit einem OHhaltigen Ester der (Meth)acrylsäure ein einfacher und bevorzugter Weg zu einer solchen Verbindung zu kommen. Grundsätzlich ist jedoch jedes Monomer geeignet in welchem die geschützte Isocyanatgruppe über einen Spacer an das (Meth)acrylat gebunden ist.

Dementsprechend sind in einer besonderen Ausführungsform der Erfindung Monomere eingesetzt, die der allgemeinen Formel 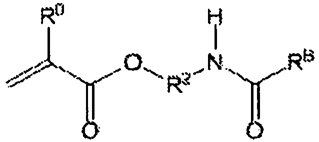 genügen, wobei
- R⁰ eine Methylgruppe oder ein Wasserstoff darstellt,
- R² einen beliebigen organischen Rest darstellt und
- R^{B} eine Schutzgruppe darstellt (R^{B} definiert wie oben).

Der Rest R² hat dabei vorzugsweise eine Molekulargewicht von nicht mehr als 750 g/mol, bevorzugt nicht mehr als 400 g/mol und besonders bevorzugt nicht mehr als 250 g/mol.

Für das die Erfindung ist es indes nicht erforderlich, daß an die Carboxylgruppe der (Meth)acrylatgruppierung des Monomers ein Sauerstoffatom gebunden ist.

Dies ist z.B. nicht der Fall, wenn sich die Verbindung von einem (Meth)acrylamid ableitet.

In einer weiteren Ausführungsform der Erfindung genügt das Monomer daher der allgemeinen Formel 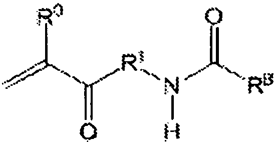 wobei
- R⁰ eine Methylgruppe oder ein Wasserstoff darstellt,
- R¹ einen beliebigen organischen Rest darstellt und
- R^{B} eine Schutzgruppe darstellt (definiert wie oben).

Der Rest R¹ hat dabei vorzugsweise ein Molekulargewicht von nicht mehr als 1000 g/mol, bevorzugt nicht mehr als 500 g/mol und besonders bevorzugt nicht mehr als 300 g/mol.

In einer besonderen Ausführungsform leitet sich das Monomere nicht von einem hydroxylgruppen-haltigen Ester der (Meth)acrylsäure, sondern von einem hydroxylgruppen-haltigen Amid der (Meth)acrylsäure - wie etwa einem Alkylalkoxyamid. Der Rest R¹ hat in dieser Ausführungsform z.B. die allgemeine Struktur 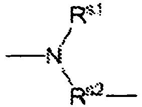 wobei
- R^{s1} ein linearer oder verzweigter Alkylrest ist und
- R^{s2} eine - mit einer der Isocyanatgruppen eines Diisocyanates abreagierten - Alkoxygruppe.

Außerdem können auch Mischungen der beschriebenen Monomere eingesetzt werden. Dies ist zum Teil schon durch die Synthese der entsprechenden Monomere vorgegeben, die bereits als Mischungen anfallen können.

Das erfindungsgemäße Polymerisat ist zu mehr als 50 Gew.-%, bevorzugt mehr als 70 Gew.-%, besonders bevorzugt mehr als 90 Gew.-%, aus Monomeren ausgewählt aus der Gruppe der Acrylsäure, Ester der Acrylsäure, Methacrylsäure und Ester der Methacrylsäure und/oder deren Mischungen aufgebaut.

Das Polymer enthält zu mehr als 30 Gew.-%, bevorzugt zu mehr als 50 Gew.-% Methylmethacrylat.

Das Polymer wird in Form von Partikeln mit einer Größe von 200-5000 nm, bevorzugt mit einer Größe von 350-2000 nm, besonders bevorzugt mit einer Größe von 500-1200 nm, eingesetzt.

Das Bindemittel ist aus Primärpartikeln aufgebaut, welche einen Aufbau besitzen, der durch eine der Ausführungsformen der Emulsionspolymerisation - und speziell der semikontinuierlichen Emulsionspolymerisation - ermöglicht wird.

Dies können neben einem Kem/Schale-Aufbau, gegebenenfalls auch mit mehreren Schalen um den Kern auch solche Strukturen sein, bei denen sich die Monomerzusammensetzung vom Zentrum des Partikels zu dessen Oberfläche allmählich ändern (Gradientenstruktur).

Die Partikel bestehen aus einem Kern und mindestens einer Schale. Das Gewicht jeder Schale macht unabhängig von einander jeweils zumindest 10% des Gesamtgewichtes des Partikels aus.

Das Polymerisat enthält nicht mehr als 1,4 Gew.-%, bevorzugt nicht mehr als 0,7 Gew.-%, besonders bevorzugt nicht mehr als 0,3 Gew.-% Tenside.

Der zur Herstellung des Polymerisats verwendete Emulgator ist vorzugsweise ein Alkylsulfat.

Die Polymerpartikel sind bevorzugt zu Sekundärpartikeln mit einer mittleren Partikelgröße von 5-500 µm, weiter bevorzugt von 10-200 µm, besonders bevorzugt von 20-100 µm, agglomeriert.

Das Verfahren zur Herstellung von Plastisolen auf Basis eines halogenfreien Polymerisats ist dadurch gekennzeichnet, dass
a) das Polymerisat durch Emulsionspolymerisation, die gegebenenfalls mehrstufig ausgeführt wird, hergestellt wird,
b) das Polymerisat durch Trocknung der entstandenen Dispersion in ein Pulver überführt wird, welches
c) anschließend mit mindestens einem Weichmacher und gegebenenfalls mit Haftvermittlern und/oder Füllstoffen und gegebenenfalls weiteren plastisolüblichen Bestandteilen versetzt wird.

Als Weichmacher werden zum Beispiel folgende Substanzen eingesetzt:
- Ester der Phthalsäure, wie z.B. Diundecylphthalat, Diisodecylphthalat, Düsononylphthalat, Dioctylphthalat, Diethylhexylphthalat, Di-C7-C11-n-alkylphthalat, Dibutylphthalat, Diisobutylphthalat, Dicyclohexylphthalat, Dimethylphthalat, Diethylphthalat, Benzyloctylphthalat, Butylbenzylphthalat, Dibenzylphthalat und Trikresylphosphat, Dihexyldicaprylphthalat.
- Hydroxycarbonsäureester, wie z.B. Ester der Zitronensäure (beispielsweise Tributyl-O-acetylcitrat, Triethyl-O-acetylcitrat), Ester der Weinsäure oder Ester der Milchsäure.
- Aliphatische Dicarbonsäureester, wie z.B. Ester der Adipinsäure (beispielsweise Dioctyladipat, Diisodecyladipat), Ester der Sebacinsäure (beispielsweise Dibutylsebacat, Dioctylsebacat, Bis(2-ethylhexyl)-sebacat) oder Ester der Azelainsäure.
- Ester der Trimellithsäure, wie z.B. Tris(2-ethylhexyl)trimellitat. Ester der Benzoesäure, wie z.B. Benzylbenzoat
- Ester der Phosphorsäure, wie z.B. Trikresylphosphat, Triphenylphosphat, Diphenylkresylphosphat, Diphenyloctylphosphat, Tris(2-ethylhexyl)-phosphat, Tris(2-butoxyethyl)phosphat.
- Alkylsulfonsäureester des Phenols oder des Kresols, Dibenzyltoluol, Diphenylether.

Die genannten und weitere Weichmacher werden einzeln oder als Mischung eingesetzt.

Bevorzugt werden Phthalate, Adipate, Phosphate oder Zitrate verwendet; wobei Phthalate besonders bevorzugt sind.

Außerdem können die erfindungsgemäßen Plastisole gegebenenfalls weitere Hilfs- und Zusatzstoffe, wie sie in der Plastisol-Technologie üblich sind, enthalten. Hierzu zählen z. B. Farbpigmente, Alterungsschutzmittel, Rheologie-Hilfsmittel sowie Treibmittel zur Herstellung von geschäumten Plastisolen.

Zu diesen üblichen Zusatzstoffen zählen beispielsweise die Epoxidweichmacher, vorzugsweise epoxidierte natürliche Ole wie das epoxidierte Sojabohnenöl, epoxidierte Leinöl oder epoxidierte Tallöle. Diese Epoxidweichmacher werden bekanntermden in geringen Mengen insbesondere in PVC-Plastisolen als Hitzestabilisatoren verwendet.

Die Plastisole können weiterhin die üblichen Alterungsschutzmittel und Stabilisatoren, Rheologie-Hilfsmittel wie z. B, pyrogene Kieselsauren, Bentone, Rizinusöl-Derivate enthalten.

Als Füllstoffe können alle in der Plastisol-Technologie gängigen und an sich bekannten Füllstoffe verwendet werden. Beispiele für geeignete Füllstoffe sind Kalksteinmehl, natürliche, gemahlene Kreiden (Calciumcarbonate oder Calcium-Magnesiumcarbonate), gefällte Kreiden, Schwerspat, Talk, Glimmer, Tone, Pigmente wie z. B. Titandioxid, Ruß, Eisenoxide.

Es hat sich gezeigt, dass beste Ergebnisse erzielt werden wenn zur Herstellung des Polymerisats eine Initiatorlösung vorgelegt und eine Monomeremulsion zudosiert wird, zu der bei Temperaturen zwischen 50°C und 100°C gegebenenfalls weitere Monomeremulsionen zudosiert werden. Dabei können verschiedene Monomeremulsionen zudosiert werden. Die Zudosierung der zweiten und jeder weiteren Monomeremulsion erfolgt bei 70-95°C.

Die erfindungsgemäßen Plastisole sind vorzugsweise folgendermaßen zusammengesetzt: 100 Gewichtsteile Bindemittel werden mit 50-300 Gewichtsteilen Weichmacher, 40-120 Gewichtsteilen Haftvermittler und/oder 0-300 Gewichtsteilen Füllstoffen versetzt.

Die erhaltenen Dispersionen werden üblicherweise mittels Sprühtrocknung getrocknet.

Die erfindungsgemäßen Plastisole haben durch ihre hervorragenden Haftungseigenschaften ein breites Anwendungsgebiet. Sie werden beispielsweise zur Beschichtung metallischer Oberflächen verwendet. Die Beschichtung mit dem Plastisol erfolgt gegebenenfalls nach vorheriger Elektotauchlackierung. Außerdem finden die Plastisole Verwendung als Unterbodenschutz, als Nahtabdeckung und zur Dämpfung von Blechschwingungen.

## Patentansprüche

1. Plastisol auf Basis eines halogenfreien Polymerisats, **dadurch gekennzeichnet, dass** die halogenfreien Polymere Isocyanatgruppen enthalten, welche durch Schutzgruppen blockiert sind.

2. Plastisol auf Basis eines halogenfreien Polymerisats gemäβ Anspruch 1, **dadurch gekennzeichnet, dass** der Isocyanatgehalt des Polymerisats 0,02 bis 5,0 Gew.-%, bevorzugt 0,1 bis 1,0 Gew.-% beträgt

3. Plastisol auf Basis eines halogenfreien Polymerisats gemäß Anspruch 1, **dadurch gekennzeichnet, dass** die Schutzgruppen der Isocyanate bei den Gelierungstempereturen des Plastisols deblockiert werden, bevorzugt bei über 100°C, und besonders bevorzugt bei über 120°C deblockiert werden.

4. Plastisol auf Basis eines halogenfreien Polymerisats gemäß Anspruch 1, **dadurch gekennzeichnet, dass** die Isocyanatgruppe über eine (Meth)acrylatgruppe im Rückrad des Polymers verankert ist.

5. Plastisol auf Basis eines halogenfreien Polymerisats nach Anspruch 4, **dadurch gekennzeichnet, dass** mindestens eines der folgenden Monomere der allgemeinen Formeln 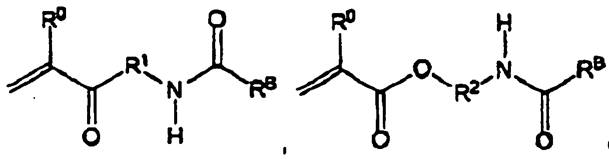 oder 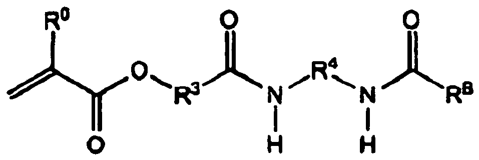 polymerisiert werden, wobei
- R⁰ eine Methylgruppe oder ein Wasserstoff darstellt,
- R¹ einen beliebigen organischen Rest darstellt
- R² einen beliebigen organischen Rest darstellt
- R³ einen beliebigen organischen Rest darstellt,
- R⁴ einen beliebigen organischen Rest darstellt und
- R^{B} eine Schutzgruppe darstellt.

6. Plastisol auf Basis eines halogenfreien Polymerisats nach Anspruch 5, **dadurch gekennzeichnet, dass** der Rest R³ ausgewählt ist aus der Gruppe 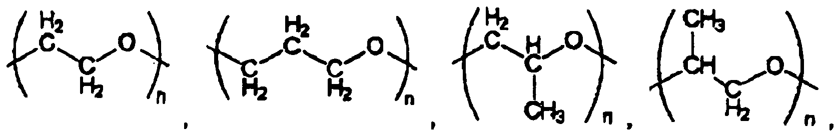 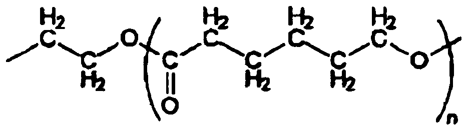 wobei n für eine ganze Zahl zwischen 1 und 6 steht, dass der Rest R⁴ ausgewählt ist aus der Gruppe 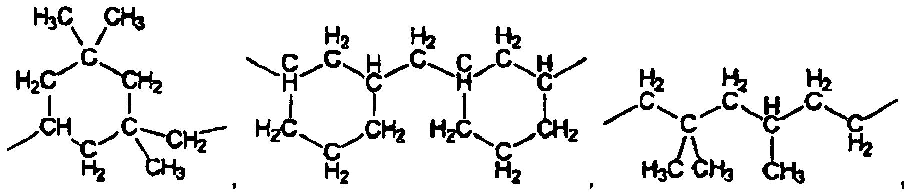 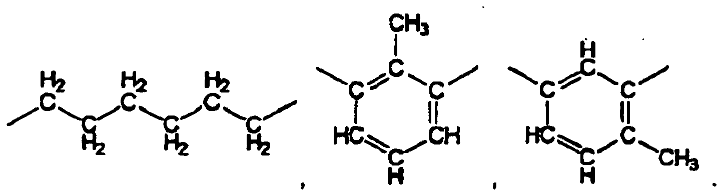 und 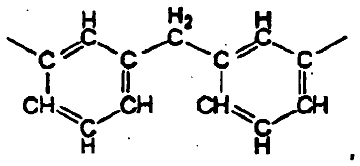 und dass der Rest R^{B} ausgewählt ist aus der
Gruppe

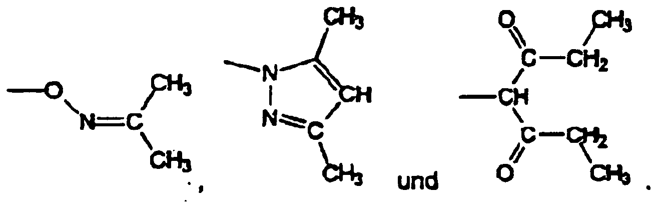

7. Plastisol auf Basis eines halogenfreien Polymerisats nach Anspruch 1, **dadurch gekennzeichnet, dass** als Blockierungsmittel Acetonoxim, Methylethylketoxim, Acetophenonoxim, Diisopropylamin, 3,5-Dimethylpyrazol, 1,2,4-Triazol, ε-Caprolactam, Glykolsäurebutylester, Benzyl-methacylohydroxamat oder p-Hydroxybenzoesäuremethylester eingesetzt werden.

8. Plastisol auf Basis eines halogenfreien Polymerisats nach Anspruch 1, **dadurch gekennzeichnet, daß** mehr als 50 Gew.% der Monomere, aus denen das Polymer aufgebaut ist, ausgewählt sind aus der Gruppe Acrylsäure, Ester der Acrylsäure, Methacrylsäure und Ester der Methacrylsäure oder/und deren Mischungen.

9. Plastisol auf Basis eines halogenfreien Polymerisats nach Anspruch 1, **dadurch gekennzeichnet, dass** das Polymer zu mehr als 30 Gew.%, bevorzugt mehr als 50 Gew% Methylmethacrylat enthält.

10. Plastisol auf Basis eines halogenfreien Polymerisats nach Anspruch 1, **dadurch gekennzeichnet, dass** das Polymer In Form von Partikeln mit einer Größe von 200-5000 nm eingesetzt wird.

11. Plastisol auf Basis eines halogenfreien Polymerisats nach Anspruch 10, **dadurch gekennzeichnet, dass** die Partikel aus einem Kern und mindestens einer Schale bestehen, und dass das Gewicht jeder Schale unabhängig von einander jeweils zumindest 10% des Gesamtgewichtes des Partikels ausmacht.

12. Plastisol auf Basis eines halogenfreien Polymerisats nach Anspruch 1, **dadurch gekennzeichnet, dass** das Polymerisat nicht mehr als 1,4 Gew%, bevorzugt nicht mehr als 0,3 Gew% Tenside enthält.

13. Plastisol auf Basis eines halogenfreien Polymerisats gemäß Anspruch 1,
**dadurch gekennzeichnet, dass** der zur Herstellung des Polymerisats verwendete Emulgator ein Alkylsulfat ist.

14. Plastisol auf Basis eines halogenfreien Polymerisats nach Anspruch 1, **dadurch gekennzeichnet, dass** die Polymerpartikel zu Sekundärpartikeln mit einer mittleren Partikelgröße von 5-500 µm agglomeriert sind.

15. Verfahren zur Herstellung von Plastisolen auf Basis eines halogenfreien Polymerisats gemäß Anspruch 1, **dadurch gekennzeichnet, dass**
a) das Polymerisat durch Emulsionspolymerisation, die gegebenenfalls mehrstufig ausgeführt wird, hergestellt wird,
b) das Polymerisat durch Trocknung der entstandenen Dispersion in ein Pulver überführt wird, welches
c) anschließend mit mindestens einem Weichmacher und gegebenenfalls mit Haftvermiftlern und/oder Füllstoffen und gegebenenfalls weiteren plastisolüblichen Bestandteilen versetzt wird.

16. Verfahren zur Herstellung von Plastisolen auf Basis eines halogenfreien Polymerisats gemäß Anspruch 15, **dadurch gekennzeichnet, dass** zur Herstellung des Polymerisats eine Initiatorlösung vorgelegt und eine Monomeremulsion zudosiert wird, zu der bei Temperaturen zwischen 50°C und 100°C gegebenenfalls weitere Monomeremulsionen zudosiert werden.

17. Verfahren zur Herstellung von Plastisolen gemäß Anspruch 15, **dadurch gekennzeichnet, dass** verschiedene Monomeremulsionen zudosiert werden, und dass die Zudosierung der zweiten und jeder weiteren Monomeremulsion bei 70-95°C erfolgt.

18. Verfahren zur Herstellung von Plastisolen gemäß Anspruch 15, **dadurch gekennzeichnet, dass** 100 Gewichtsteile Bindemittel mit 50-300 Gewichtsteilen Weichmacher, 40-120 Gewichtsteilen Haftvermittler und/oder 0-300 Gewichtsteilen Füllstoffen versetzt werden.

19. Verfahren zur Herstellung von Plastisolen gemäß Anspruch 15, **dadurch gekennzeichnet, dass** die Dispersionen mittels Sprühtrocknung getrocknet werden.

20. Beschichtete metallische Oberfläche, **dadurch gekennzeichnet, dass** die Beschichtung mit einem Plastisol nach Anspruch 1 erfolgt, gegebenenfalls nach vorheriger Elektrotauchlackierung.

21. Verwendung von Plastisolen gemäß Anspruch 1 zur Beschichtung metallischer Oberflächen, als Unterbodenschutz, Nahtabdeckung oder zur Dämpfung von Blechschwingungen.

## Claims

1. Plastisol based on a halogen-free polymer, **characterized in that** the halogen-free polymers contain isocyanate groups which are blocked by protective groups.

2. Plastisol based on a halogen-free polymer according to claim 1, **characterized in that** the isocyanate content of the polymer is 0.02 to 5.0% by weight, preferably 0.1 to 1.0% by weight.

3. Plastisol based on a halogen-free polymer according to claim 1, **characterized in that** the protective groups of the isocyanates are deblocked at the gelling temperatures of the plastisol, preferably at above 100°C and particularly preferably at above 120°C.

4. Plastisol based on a halogen-free polymer according to claim 1, **characterized in that** the isocyanate group is anchored via a (meth)acrylate group in the backbone of the polymer.

5. Plastisol based on a halogen-free polymer according to claim 4, **characterized in that** at least one of the following monomers of the general formulae 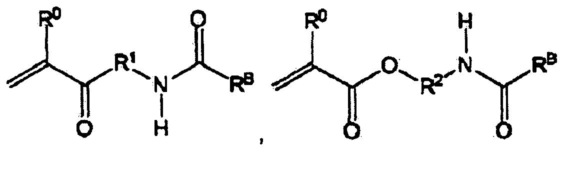 or 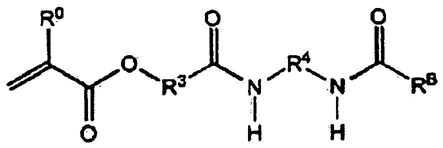 are polymerized, where
- R⁰ is a methyl group or a hydrogen,
- R¹ is any desired organic radical,
- R² is any desired organic radical,
- R³ is any desired organic radical,
- R⁴ is any desired organic radical, and
- R^{B} is a protective group.

6. Plastisol based on a halogen-free polymer according to claim 5, **characterized in that** the radical R³ is selected from the group 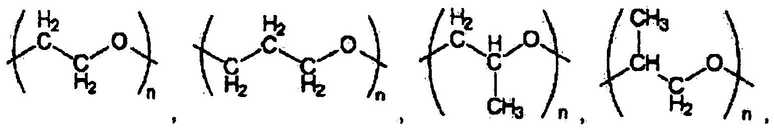 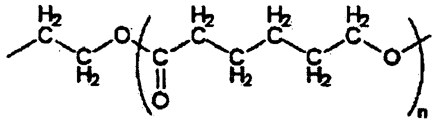 where n is an integer between 1 and 6, that the radical R⁴ is selected from the group 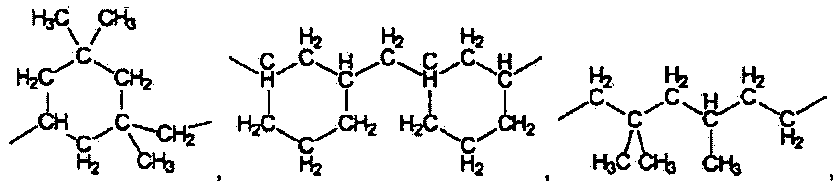 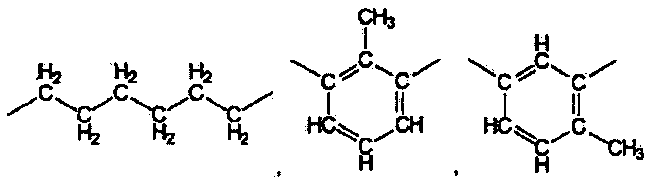 and 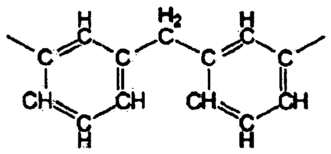 and that the radical R^{B} is selected from the group

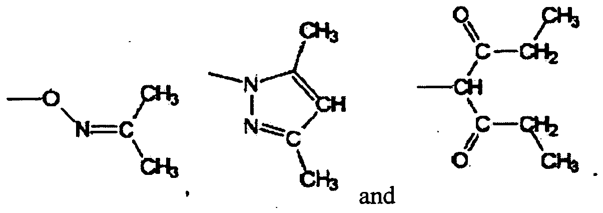

7. Plastisol based on a halogen-free polymer according to claim 1, **characterized in that** blocking agents used are acetone oxime, methyl ethyl ketoxime, acetophenone oxime, diisopropylamine, 3,5-dimethylpyrazole, 1,2,4-triazole, ε-caprolactam, butyl glycolate, benzyl methacylohydroxamate or methyl p-hydroxybenzoate.

8. Plastisol based on a halogen-free polymer according to claim 1, **characterized in that** more than 50% by weight of the monomers from which the polymer is constructed are selected from the group of acrylic acid, esters of acrylic acid, methacrylic acid and esters of methacrylic acid or/and mixtures thereof.

9. Plastisol based on a halogen-free polymer according to claim 1, **characterized in that** the polymer to an extent of more than 30% by weight, preferably more than 50% by weight contains methyl methacrylate.

10. Plastisol based on a halogen-free polymer according to claim 1, **characterized in that** the polymer is used in the form of particles having a size of 200-5000 nm.

11. Plastisol based on a halogen-free polymer according to claim 10, **characterized in that** the particles are composed of a core and at least one shell, and that the weight of each shell, independently of one another, accounts in each case for at least 10% of the total weight of the particle.

12. Plastisol based on a halogen-free polymer according to claim 1, **characterized in that** the polymer contains not more than 1.4%, preferably not more than 0.3% by weight of surfactants.

13. Plastisol based on a halogen-free polymer according to claim 1, **characterized in that** the emulsifier used to prepare the polymer is an alkyl sulfate.

14. Plastisol based on a halogen-free polymer according to claim 1, **characterized in that** the polymer particles have undergone agglomeration to secondary particles having an average particle size of 5-500 µm.

15. Process for preparing plastisols based on a halogen-free polymer according to claim 1, **characterized in that**
a) the polymer is prepared by emulsion polymerization, which where appropriate is performed multi-stagedly,
b) the polymer is converted into a powder by drying of the resultant dispersion, and this powder
c) is subsequently admixed with at least one plasticizer and where appropriate with adhesion promoters and/or fillers and, where appropriate, further constituents typical of plastisols.

16. Process for preparing plastisols based on a halogen-free polymer according to claim 15, **characterized in that**, for the preparation of the polymer, an initiator solution is introduced as an initial charge and a monomer emulsion is metered in, to which, at temperatures between 50°C and 100°C, where appropriate, further monomer emulsions are metered in.

17. Process for preparing plastisols according to claim 15, **characterized in that** different monomer emulsions are metered in and that the metering in of the second and each further monomer emulsion takes place at 70-95°C.

18. Process for preparing plastisols according to claim 15, **characterized in that** 100 parts by weight of binder are admixed with 50-300 parts by weight of plasticizer, 40-120 parts by weight of adhesion promoter and/or 0-300 parts by weight of fillers.

19. Process for preparing plastisols according to claim 15, **characterized in that** the dispersions are dried by means of spray drying.

20. Coated metallic surface, **characterized in that** coating takes place with a plastisol according to claim 1, where appropriate after electrodeposition coating beforehand.

21. Use of plastisols according to claim 1 for coating metallic surfaces, as underbody protection, as seam masking or for damping metal-panel vibrations.

## Revendications

1. Plastisol à base d'un polymérisat exempt d'halogène, **caractérisé en ce que** les polymères exempts d'halogène contiennent des groupes isocyanates, lesquels sont bloqués par des groupes de protection.

2. Plastisol à base d'un polymérisat exempt d'halogène selon la revendication 1, **caractérisé en ce que** la teneur en isocyanate du polymérisat est de 0,02 à 5,0 % en poids, de préférence de 0,1 à 1,0 % en poids.

3. Plastisol à base d'un polymérisat exempt d'halogène selon la revendication 1, **caractérisé en ce que** les groupes de protection des isocyanates sont débloqués aux températures de gélification du plastisol, de préférence à plus de 100 °C, et de façon particulièrement préférée à plus de 120 °C.

4. Plastisol à base d'un polymérisat exempt d'halogène selon la revendication 1, **caractérisé en ce que** le groupe isocyanate est ancré dans la chaîne du polymère via un groupe (méth)acrylate.

5. Plastisol à base d'un polymérisat exempt d'halogène selon la revendication 4, **caractérisé en ce qu'**au moins un des monomères suivants des formules générales 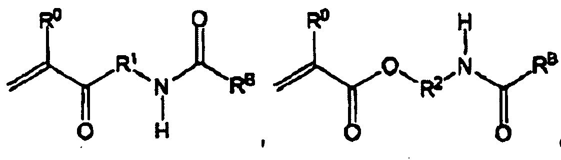 ou 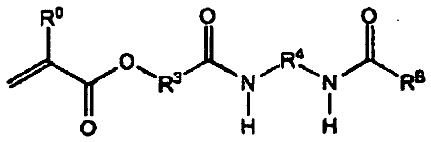 est polymérisé, où
- R⁰ représente un groupe méthyle ou un hydrogène
- R¹ représente un radical organique choisi
- R² représente un radical organique choisi
- R³ représente un radical organique choisi
- R⁴ représente un radical organique choisi et
- R^{B} représente un groupe de protection.

6. Plastisol à base d'un polymérisat exempt d'halogène selon la revendication 5, **caractérisé en ce que** le radical R³ est choisi dans le groupe 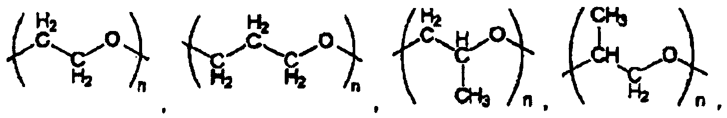 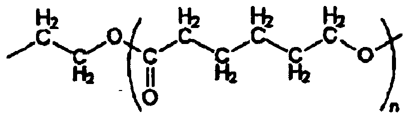 où n désigne un nombre entier compris entre 1 et 6, **en ce que** le radical R⁴ est choisi dans le groupe 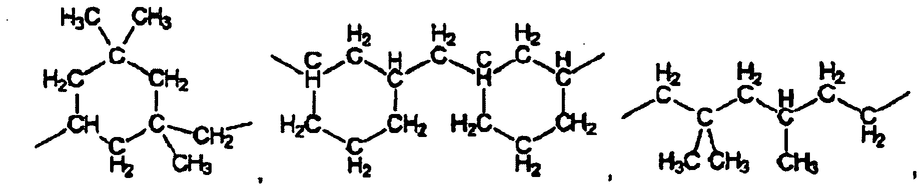 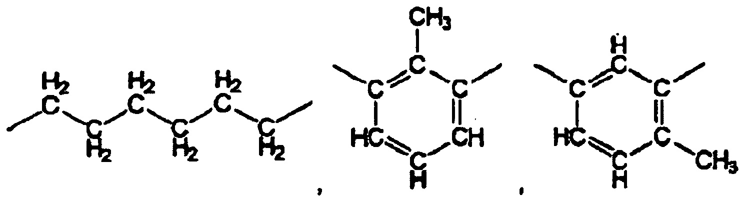 et 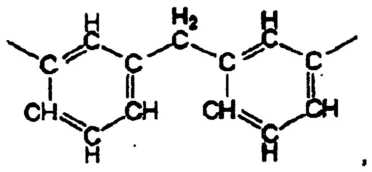 et **en ce que** le radical R^{B} est choisi dans le groupe

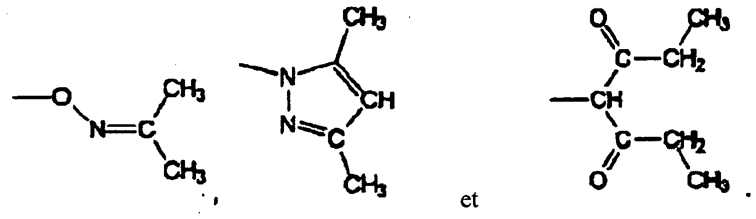

7. Plastisol à base d'un polymérisat exempt d'halogène selon la revendication 1, **caractérisé en ce que** comme agents de blocage sont mis en oeuvre de l'acétonoxime, de la méthyléthylcétoxime, de l'acétophénonoxime, de la diisopropylamine, du 3,5-diméthylpyrazole, du 1,2,4-triazol, de l'ε-caprolactame, de l'ester butylique d'acide glycolique, du benzylméthacylohydroxamate ou de l'ester méthylique d'acide p-hydroxybenzoïque.

8. Plastisol à base d'un polymérisat exempt d'halogène selon la revendication 1, **caractérisé en ce que** plus de 50 % en poids des monomères à partir desquels est construit le polymère sont choisis dans le groupe constitué de l'acide acrylique, des esters de l'acide acrylique, de l'acide méthacrylique et des esters de l'acide méthacrylique, et/ou de leurs mélanges.

9. Plastisol à base d'un polymérisat exempt d'halogène selon la revendication 1, **caractérisé en ce que** le polymère contient plus de 30 % en poids, de préférence plus de 50 % en poids de méthacrylate de méthyle.

10. Plastisol à base d'un polymérisat exempt d'halogène selon la revendication 1, **caractérisé en ce que** le polymère est mis en oeuvre sous forme de particules d'une taille de 200 à 5 000 nm.

11. Plastisol à base d'un polymérisat exempt d'halogène selon la revendication 10, **caractérisé en ce que** les particules consistent en un noyau et en au moins une coque et **en ce que** le poids de chaque coque,indépendamment les unes des autres, compte respectivement pour au moins 10 % du poids total de la particule.

12. Plastisol à base d'un polymérisat exempt d'halogène selon la revendication 1, **caractérisé en ce que** le polymérisat ne contient pas plus de 1,4 % en poids, de préférence pas plus de 0,3 % en poids d'agents tensioactifs.

13. Plastisol à base d'un polymérisat exempt d'halogène selon la revendication 1, **caractérisé en ce que** l'émulsifiant utilisé à la fabrication du polymère est un sulfate d'alkyle.

14. Plastisol à base d'un polymérisat exempt d'halogène selon la revendication 1, **caractérisé en ce que** les particules de polymère sont agglomérées en particules secondaires d'une taille moyenne de particule de 5 à 500 µm.

15. Procédé de fabrication de plastisols à base d'un polymérisat exempt d'halogène selon la revendication 1, **caractérisé en ce que**
a) le polymérisat est fabriqué par polymérisation en émulsion, laquelle est le cas échéant exécutée en plusieurs étapes,
b) le polymérisat est transformé en poudre par séchage de la dispersion obtenue, laquelle poudre
c) est ensuite mélangée à au moins un plastifiant et le cas échéant à des agents de pontage et/ou à des charges, et le cas échéant à d'autres composants habituels dans les plastisols.

16. Procédé de fabrication de plastisols à base d'un polymérisat exempt d'halogène selon la revendication 15, **caractérisé en ce que** pour la fabrication du polymérisat, une solution d'initiateur est introduite et une émulsion de monomère lui est ajoutée par dosage, à laquelle d'autres émulsions de monomère sont le cas échéant ajoutées par dosage à des températures comprises entre 50 °C et 100 °C.

17. Procédé de fabrication de plastisols selon la revendication 15, **caractérisé en ce que** différentes émulsions de monomère sont ajoutées par dosage et **en ce que** l'addition dosée de la deuxième émulsion de monomère et de chaque émulsion de monomère supplémentaire s'effectue à 70 à 95 °C.

18. Procédé de fabrication de plastisols selon la revendication 15, **caractérisé en ce que** 100 parties pondérales de liant sont mélangées à 50 à 300 parties pondérales de plastifiant, 40 à 120 parties pondérales d'agent de pontage et/ou 0 à 300 parties pondérales de charges.

19. Procédé de fabrication de plastisols selon la revendication 15, **caractérisé en ce que** les dispersions sont séchées par séchage par pulvérisation.

20. Surface métallique revêtue, **caractérisée en ce que** le revêtement s'effectue avec un plastisol selon la revendication 1, le cas échéant après une peinture électrophorétique par immersion préalable.

21. Utilisation de plastisols selon la revendication 1 pour le revêtement de surfaces métalliques, comme protection du bas de caisse, recouvrement de jonction ou pour l'amortissement de vibrations de tôle.
